# EUROPÄISCHE PATENTANMELDUNG

(11) **EP 3 613 971 A1**
(43) Veröffentlichungstag der Anmeldung: **26.02.2020**
(21) Anmeldenummer: 18465561.1
(22) Anmeldetag: 21.08.2018
(51) Int. Cl.: F02D 9/02, F02B 39/10, F02D 23/00

(54) **ZUFUHRVORRICHTUNG FÜR EINE BRENNKRAFTMASCHINE**

(71) Anmelder: Continental Automotive GmbH, 30165 Hannover (DE)
(72) Erfinder: Macovei, Mihai-Georgian, 300715 Timisoara (RO)

(57) **Zusammenfassung**

Die vorliegende Erfindung betrifft eine Zufuhrvorrichtung für eine Brennkraftmaschine, insbesondere eines Kraftfahrzeugs, wobei die Zufuhrvorrichtung aufweist:
- einen Kanal (10) zum Führen von Luft (L) für wenigstens einen Brennraum (50) der Brennkraftmaschine;
- wenigstens ein Axiallaufrad mit mehreren an einem Rotor (20) angeordneten Laufschaufeln (21), das in dem Kanal angeordnet ist; und
- wenigstens eine elektrische Maschine (30), die mit dem Axiallaufrad gekoppelt ist.

## Beschreibung

Die vorliegende Erfindung betrifft eine Zufuhrvorrichtung für eine Brennkraftmaschine, eine Brennkraftmaschinenanordnung und ein Kraftfahrzeug mit der Zufuhrvorrichtung sowie ein Verfahren zum Betreiben einer elektrischen Maschine der Brennkraftmaschinenanordnung.

Brennräumen von Brennkraftmaschinen wird Luft zugeführt. Um die zugeführte Luftmenge zu regulieren, sind Drosselklappen im Ansaugtrakt bekannt, die um eine Schwenkachse quer zur Strömungsrichtung der angesaugten Luft verschwenkt werden und so den Luftstrom zu den Brennräumen drosseln.

Eine Aufgabe einer Ausführung der vorliegenden Erfindung ist es, den Betrieb und/oder Aufbau einer Brennkraftmaschine, insbesondere eines Kraftfahrzeugs, zu verbessern.

Diese Aufgabe wird durch eine Zufuhrvorrichtung mit den Merkmalen des Anspruchs 1 gelöst. Ansprüche 5, 7 und 8 stellen eine Brennkraftmaschinenanordnung bzw. ein Kraftfahrzeug mit einer hier beschriebenen Zufuhrvorrichtung bzw. ein Verfahren zum Betreiben einer elektrischen Maschine einer hier beschriebenen Zufuhrvorrichtung unter Schutz. Vorteilhafte Ausführungsformen der Erfindung sind Gegenstand der Unteransprüche.

Nach einer Ausführung der vorliegenden Erfindung weist eine Zufuhrvorrichtung für eine Brennkraftmaschine, insbesondere eines Kraftfahrzeugs, einen Kanal auf, durch den im Betrieb wenigstens zeitweise Luft für einen oder mehrere Brennräume der Brennkraftmaschine (zu) geführt wird bzw. strömt bzw. der hierzu vorgesehen, insbesondere eingerichtet ist bzw. verwendet wird.

Diese Luft kann in einer Ausführung Frischluft, insbesondere, in einer Ausführung durch einen Turbolader, druckaufgeladene oder nicht druckaufgeladene Frischluft, in einer Ausführung, insbesondere durch einen Luftfilter gefilterte Frischluft, aufweisen, insbesondere sein. In einer Ausführung kann die (Frisch)Luft beigemischten Kraftstoff und/oder Abgas aufweisen oder hiervon frei sein. Die Luft für einen Brennraum dient in einer Ausführung der Verbrennung in dem Brennraum bzw. ist hierzu vorgesehen bzw. wird hierzu verwendet.

Die Zufuhreinrichtung kann die Luft für nur einen Teil der Brennräume der Brennkraftmaschine, in einer Ausführung nur für einen Brennraum der Brennkraftmaschine, führen bzw. hierzu vorgesehen, insbesondere eingerichtet sein bzw. verwendet werden und somit in einer Ausführung eine Einzeldrossel(klappe) ersetzen. In einer anderen Ausführung führt die Zufuhreinrichtung die Luft für alle Brennräume der Brennkraftmaschine bzw. ist hierzu vorgesehen, insbesondere eingerichtet bzw. wird hierzu verwendet und kann somit in einer Ausführung eine (Gesamt) Drossel (klappe) ersetzen. Insbesondere hierzu kann der Kanal in einer Ausführung in einem Ansaugtrakt der Brennkraftmaschine angeordnet sein, insbesondere diesen wenigstens teilweise bilden.

Nach einer Ausführung der vorliegenden Erfindung weist die Zufuhrvorrichtung wenigstens, in einer Ausführung nur, ein Laufrad mit mehreren an einem Rotor angeordneten Laufschaufeln auf, das (drehbar) in dem Kanal angeordnet, insbesondere gelagert, ist.

In einer bevorzugten Ausführung ist das Laufrad ein Axiallaufrad bzw. die Rotationsachse des Rotors bzw. Axiallaufrads parallel zur Kanal(längs)achse und/oder Luftströmung bzw. schließt mit dieser einen Winkel ein, der höchstens 30°, insbesondere höchstens 15°, in einer Ausführung höchstens 5°, beträgt.

Ein Axiallaufrad ist, insbesondere strömungs- und/oder antriebstechnisch, besonders vorteilhaft. Gleichwohl ist die vorliegende Erfindung nicht hierauf beschränkt.

Die Laufschaufeln sind in einer Ausführung, insbesondere äquidistant, längs einer Umfangsrichtung um die Rotationsachse des Rotors verteilt (angeordnet).

Sie können in einer Ausführung deckbandlos sein, so dass ein Strömungsquerschnitt des (Axial)Laufrads durch den Kanal bzw. dessen Innenwand begrenzt wird.

Hierdurch kann das (Axial) Laufrad in einer Ausführung besonders leicht und/oder kompakt bauen.

In einer anderen Ausführung sind die Laufschaufeln durch ein Außendeckband verbunden, das den Kanal bzw. Strömungsquerschnitt des (Axial)Laufrads radial, insbesondere außen, begrenzt.

Hierdurch kann in einer Ausführung das (Axial)Laufrad strömungstechnisch verbessert werden.

Die Laufschaufeln weisen in einer Ausführung (jeweils) eine (stromaufwärtige) Vorderkante, eine (stromabwärtige) Hinterkante und zwei diese verbindende Seiten, insbesondere eine gewölbte Druck- und eine gewölbte Saugseite, auf. Profil (schnitt) e der Lauf schaufeln können in einer Ausführung längs ihrer Fädelachse gegeneinander verdreht sein.

Hierdurch kann in einer Ausführung das (Axial)Laufrad strömungstechnisch (weiter) verbessert werden.

Gleichermaßen können die Laufschaufeln in einer Ausführung auch ein (längs ihrer Fädelachse) konstantes Profil aufweisen.

Hierdurch kann in einer Ausführung die Herstellung des (Axial)Laufrads vereinfacht werden.

In einer Ausführung weist das (Axial) Laufrad Kunststoff auf, es kann insbesondere hieraus bestehen.

Hierdurch kann das (Axial) Laufrad in einer Ausführung besonders leicht bauen.

Nach einer Ausführung der vorliegenden Erfindung weist die Zufuhrvorrichtung wenigstens, in einer Ausführung nur, eine elektrische Maschine auf, die mit dem (Axial)Laufrad (dreh)gekoppelt bzw. wirkverbunden ist.

Hierdurch kann in einer Ausführung die durch (Axial)Laufrad und elektrische Maschine gebildete (Axial)Strömungsmaschine eine Drosselklappe bzw. deren Funktion(alität) teilweise oder vollständig ersetzen bzw. übernehmen bzw. ist nach einer Ausführung der vorliegenden Erfindung hierzu vorgesehen, insbesondere eingerichtet, bzw. wird nach einer Ausführung der vorliegenden Erfindung hierzu verwendet.

Dadurch können in einer Ausführung Strömungsverluste (gegenüber) einer herkömmlichen Drosselklappe, insbesondere bei vollständig geöffneter Stellung bzw. maximalem Luftdurchlass, vorteilhaft reduziert werden. Zusätzlich oder alternativ kann in einer Ausführung durch die Verwendung einer Strömungsmaschine, insbesondere Axialströmungsmaschine, die Luftströmung (stärker) verwirbelt bzw. ihre Turbulenz erhöht und dadurch die Verbrennung in der Brennkraftmaschine verbessert werden. Zusätzlich oder alternativ kann in einer Ausführung die Luftströmung, insbesondere gegenüber einer herkömmlichen Drosselklappe stärker, variiert werden. Zusätzlich oder alternativ kann in einer Ausführung die Zufuhrvorrichtung, insbesondere gegenüber einer herkömmlichen Drosselklappe, kompakt(er) bauen.

In einer Ausführung ist die elektrische Maschine in dem Kanal, in einer Weiterbildung stromabwärts nach dem (Axial)Laufrad, angeordnet. In einer Ausführung ist eine Antriebswelle der elektrischen Maschine parallel, insbesondere koaxial, zur Rotationsachse des Axiallaufrads.

Hierdurch kann in einer Ausführung die Zufuhrvorrichtung (noch) kompakter bauen und/oder die elektrische Maschine durch den Luftstrom gekühlt werden.

In einer anderen Ausführung ist eine Antriebswelle der elektrischen Maschine von der Rotationsachse des (Axial) Laufrads radial beabstandet, in einer Weiterbildung wenigstens um den Durchmesser des (Axial)Laufrads, und/oder parallel zur Rotationsachse des (Axial)Laufrads oder gegen diese geneigt. Zusätzlich oder alternativ ist in einer Ausführung die elektrische Maschine radial außerhalb einer Innenwand des Kanals angeordnet.

Hierdurch kann in einer Ausführung die Durchströmung des Kanals verbessert werden und/oder dieser kompakt(er) bauen, insbesondere bei größeren elektrischen Maschinen und/oder Getrieben.

In einer Ausführung weist die Zufuhrvorrichtung ein Getriebe, in einer Ausführung ein ein- oder mehrstufiges Stirnradgetriebe, auf, das die elektrische Maschine mit dem Axiallaufrad koppelt.

Hierdurch können in einer Ausführung kleine(re) elektrische Maschinen verwendet werden und so die Zufuhrvorrichtung (noch) kompakter bauen.

In einer Ausführung weist das Getriebe eine Außenverzahnung des (Axial)Laufrads auf.

Hierdurch kann in einer Ausführung die Zufuhrvorrichtung (noch) kompakter bauen.

Nach einer Ausführung der vorliegenden Erfindung weist eine Brennkraftmaschinenanordnung, insbesondere (zum Antreiben) eines Kraftfahrzeugs, eine Brennkraftmaschine, insbesondere einen Otto- oder Dieselmotor, und eine hier beschriebene Zufuhrvorrichtung auf, die bzw. deren Kanal im Betrieb wenigstens zeitweise Luft für einen oder mehrere Brennräume der Brennkraftmaschine (zu) führt bzw. die hierzu vorgesehen, insbesondere eingerichtet ist bzw. verwendet wird.

Wie vorstehend erläutert, basiert eine Ausführung der vorliegenden Erfindung auf der Idee, eine herkömmliche Drosselklappe durch eine Strömungsmaschine, vorzugsweise Axialströmungsmaschine, mit einem (Axial)Laufrad und einer damit gekoppelten elektrischen Maschine zu ergänzen oder zu ersetzen bzw. wird eine (Zufuhrvorrichtung mit einer solchen) (Axial)Strömungsmaschine hierzu verwendet bzw. ist hierzu vorgesehen, insbesondere eingerichtet.

Entsprechend aktuiert nach einer Ausführung der vorliegenden Erfindung in (wenigstens) einem Drossel-Betriebsmodus die elektrische Maschine das (Axial)Laufrad zum Drosseln eines Luftstroms zur Brennkraftmaschine bzw. um einen Luftstrom zur Brennkraftmaschine zu drosseln bzw. wird entsprechend verwendet bzw. betrieben, insbesondere gesteuert, insbesondere geregelt.

In einer Ausführung wird das Laufrad in einem Drossel-Betriebsmodus durch einen von der Brennkraftmaschine angesaugten bzw. dieser zugeführten Luftstrom angetrieben und dabei durch die elektrische Maschine, in einer Ausführung unterschiedlich stark bzw. variierend, insbesondere zunehmend oder abnehmend, gebremst, in einer Ausführung (bis) zum Stillstand, wobei die elektrische Maschine entsprechend in diesem Drossel-Betriebsmodus generatorisch bzw. als Generator verwendet wird bzw. fungiert bzw. betrieben wird.

Hierdurch kann in einer Ausführung analog zu einer herkömmlichen Drosselklappe der Luftstrom zur Brennkraftmaschine variabel gedrosselt und dabei elektrische Energie produziert werden, die in einer Ausführung zur Versorgung von Verbrauchern verwendet und/oder gespeichert und in einer Weiterbildung anschließend zur Versorgung der elektrischen Maschine in einem Motorbetrieb bzw. der das (Axial)Laufrad antreibenden elektrischen Maschine genutzt werden kann.

Zusätzlich oder alternativ treibt in einer Ausführung die elektrische Maschine das (Axial) Laufrad in einem, gegebenenfalls weiteren, Drossel-Betriebsmodus mit einer Förderrichtung an, die gegensinnig zu einem von der Brennkraftmaschine angesaugten Luftstrom ist bzw. sucht, von der Brennkraftmaschine angesaugte Luft (gegen die Ansaug(strömungs)richtung) zurückzufördern, insbesondere also mit einer Drehrichtung bzw. einem Drehsinn, der der Drehrichtung bzw. dem Drehsinn des (Axial)Laufrads entgegengesetzt bzw. -richtet ist, die bzw. den das (Axial) Lauf rad aufweisen würde, wenn es von der elektrischen Maschine entkoppelt von einer Luftströmung zur Brennkraftmaschine hin bzw. von der Brennkraftmaschine angesaugten Luft durchströmt würde.

Hierdurch kann in einer Ausführung der Luftstrom zur Brennkraftmaschine stärker gedrosselt, in einer Ausführung analog zu einer geschlossenen Drosselklappe gestoppt und in einer Weiterbildung sogar umgekehrt werden.

Zusätzlich oder alternativ treibt in einer Ausführung die elektrische Maschine das (Axial) Laufrad in einem, gegebenenfalls weiteren, Drossel-Betriebsmodus mit einer Förderrichtung, die gleichsinnig zu einem von der Brennkraftmaschine angesaugten Luftstrom ist, derart an, dass das (Axial)Laufrad den von der Brennkraftmaschine angesaugten Luftstrom abbremst und/oder dessen statischen Druck reduziert, in einer Ausführung schwächer als bei stillstehendem oder ungebremst mitdrehendem (Axial)Laufrad.

Hierdurch kann in einer Ausführung der Luftstrom zur Brennkraftmaschine schwächer gedrosselt, insbesondere zusätzlich zu einem durch die elektrische Maschine gebremsten oder gegen die Strömungsrichtung zur Brennkraftmaschine hin fördernden (Axial)Laufrad ein weiterer Betriebsbereich zur Verfügung gestellt und so die Drosselung weiter variiert werden. Zusätzlich oder alternativ treibt in einer Ausführung die elektrische Maschine das (Axial)Laufrad in einem Förder-Betriebsmodus mit einer Förderrichtung, die gleichsinnig zu einem von der Brennkraftmaschine angesaugten Luftstrom ist, derart an, dass das (Axial) Laufrad den von der Brennkraftmaschine angesaugten Luftstrom beschleunigt und/oder dessen statischen Druck erhöht.

Hierdurch können in einer Ausführung Druckverluste, insbesondere durch Luftfilter, Dämpfer oder dergleichen, wenigstens teilweise ausgeglichen und in einer Ausführung die angesaugte Luft sogar druckaufgeladen und dadurch die Verbrennung in der Brennkraftmaschine verbessert werden.

In einer Ausführung weist die Brennkraftmaschinenanordnung eine Steuerung auf, die, insbesondere hard- und/oder software-, insbesondere programmtechnisch, zur Durchführung eines hier beschriebenen Verfahrens ausgebildet ist und/oder (wenigstens) einen Drossel-Betriebsmodus aufweist, in dem die elektrische Maschine das Axiallaufrad zum Drosseln eines Luftstroms zur Brennkraftmaschine aktuiert, insbesondere also
einen bzw. den vorstehend beschriebenen Drossel-Betriebsmodus, in dem die elektrische Maschine das durch einen von der Brennkraftmaschine angesaugten Luftstrom angetriebene Laufrad generatorisch bremst; und/oder
einen bzw. den vorstehend beschriebenen Drossel-Betriebsmodus, in dem die elektrische Maschine das Laufrad mit einer Förderrichtung antreibt, die gegensinnig zu einem von der Brennkraftmaschine angesaugten Luftstrom ist; und/oder
einen bzw. den vorstehend beschriebenen Drossel-Betriebsmodus, in dem die elektrische Maschine das Laufrad mit einer Förderrichtung antreibt, die gleichsinnig zu einem von der Brennkraftmaschine angesaugten Luftstrom ist, und das Laufrad den von der Brennkraftmaschine angesaugten Luftstrom abbremst und/oder dessen statischen Druck reduziert; und/oder
einen bzw. den vorstehend beschriebenen Förder-Betriebsmodus, in dem die elektrische Maschine das Laufrad mit einer Förderrichtung antreibt, die gleichsinnig zu einem von der Brennkraftmaschine angesaugten Luftstrom ist, und das Laufrad den von der Brennkraftmaschine angesaugten Luftstrom beschleunigt und/oder dessen statischen Druck erhöht.

In einer Ausführung werden ein oder mehrere, insbesondere alle, Schritte des Verfahrens vollständig oder teilweise automatisiert durchgeführt, insbesondere durch die Steuerung.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Brennkraftmaschinenanordnung mit einer Zufuhrvorrichtung nach einer Ausführung der vorliegenden Erfindung;
- Fig. 2: einen Teil einer Brennkraftmaschinenanordnung mit einer Zufuhrvorrichtung nach einer weiteren Ausführung der vorliegenden Erfindung; und
- Fig. 3: ein Verfahren zum Betreiben einer elektrischen Maschine der Brennkraftmaschinenanordnung bzw. Zufuhrvorrichtung nach einer Ausführung der vorliegenden Erfindung.

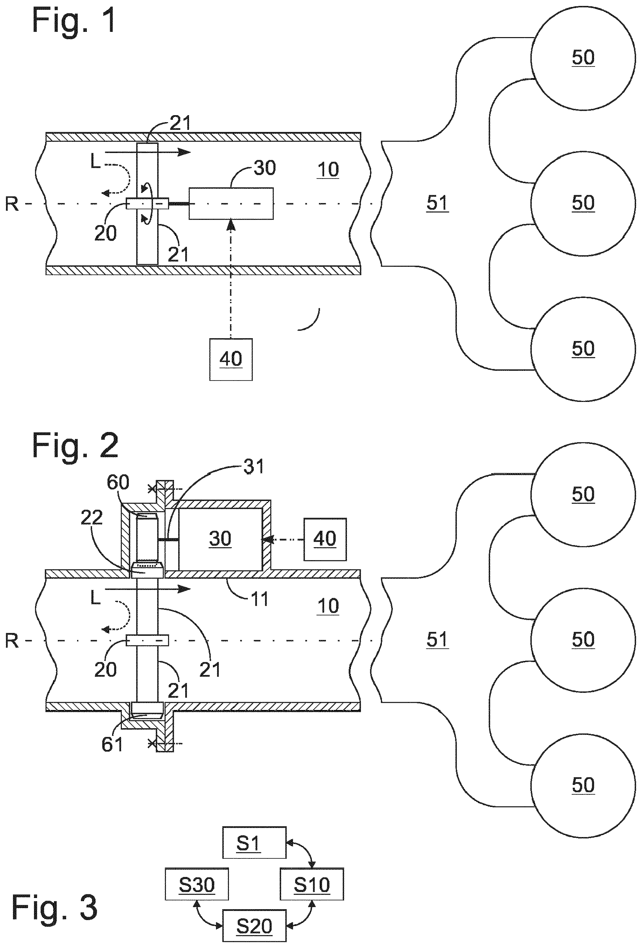

Fig. 1 zeigt einen Teil einer Brennkraftmaschinenanordnung mit einer Zufuhrvorrichtung nach einer Ausführung der vorliegenden Erfindung.

Die Zufuhreinrichtung weist einen Kanal 10 zum Führen von Luft für Brennräume 50 der Brennkraftmaschine auf, beispielsweise einen (Teil eines) Ansaugtrakt(es) vor einem sich fächerförmig verzweigenden Ansaugkrümmer 51 der Brennkraftmaschine.

In dem Kanal 10 ist ein Axiallaufrad mit mehreren an einem Rotor 20 angeordneten Laufschaufeln 21 und stromabwärts nach dem Axiallaufrad eine elektrische Maschine 30 angeordnet, die mit dem Axiallaufrad gekoppelt ist und deren Antriebswelle 31 koaxial zur Rotationsachse R des Axiallaufrads und der (Längs)Achse des Kanals 10 ist.

Die Brennkraftmaschinenanordnung weist eine Steuerung, beispielsweise eine ECU, 40 auf, die die elektrische Maschine 30 nach einem Verfahren nach einer Ausführung der vorliegenden Erfindung betreibt, insbesondere steuert, bzw. hierzu eingerichtet ist bzw. verwendet wird.

In einem Förder-Betriebsmodus, insbesondere einem Volllastbetriebsbereich bzw. -punkt (Fig. 3: S1) treibt die elektrische Maschine, die somit als Elektromotor wirkt bzw. fungiert bzw. betrieben wird, das Axiallaufrad mit einer Förderrichtung, die gleichsinnig zu einem von der Brennkraftmaschine angesaugten Luftstrom (von links nach rechts in Fig. 1) ist, derart an, dass das Axiallaufrad den von der Brennkraftmaschine angesaugten Luftstrom zusätzlich beschleunigt und/oder dessen statischen Druck erhöht, so dass insbesondere gegenüber einer herkömmlichen Drosselklappe Druckverluste, beispielsweise durch vorgeschaltete Luftfilter, Dämpfer oder dergleichen (nicht dargestellt), wenigstens teilweise kompensiert und in einer Ausführung sogar die Ansaugluft zusätzlich druckaufgeladen werden können. Dies ist in Fig. 1 durch einen ausgezogenen Luftströmungspfeil L angedeutet.

In einem ersten Drossel-Betriebsmodus, insbesondere Teillastbetriebsbereich bzw. -punkt (Fig. 3: S10) treibt die elektrische (Arbeits)Maschine, die somit weiterhin als Elektromotor wirkt bzw. fungiert bzw. betrieben wird, das Axiallaufrad mit derselben Förderrichtung derart (schwächer) an, dass das Axiallaufrad den von der Brennkraftmaschine angesaugten Luftstrom abbremst und/oder dessen statischen Druck reduziert, allerdings schwächer als bei einem rein passiv durch den Luftstrom angetriebenen oder stehenden Axiallaufrad.

In einem zweiten Drossel-Betriebsmodus bzw. (niedrigeren) Teillastbetriebsbereich bzw. -punkt (Fig. 3: S20) bremst die elektrische (Kraft)Maschine, die somit nun als Generator wirkt bzw. fungiert bzw. betrieben wird, das durch den von der Brennkraftmaschine angesaugten Luftstrom angetriebene Axiallaufrad generatorisch.

In einem dritten Drossel-Betriebsmodus bzw. (noch niedrigeren) Teillastbetriebsbereich bzw. -punkt (Fig. 3: S30) treibt die elektrische (Arbeits) Maschine, die somit wieder als Elektromotor wirkt bzw. fungiert bzw. betrieben wird, das Axiallaufrad mit einer Förderrichtung an, die gegensinnig zu dem von der Brennkraftmaschine angesaugten Luftstrom ist, so dass das Axiallaufrad versucht, Luft in Fig. 1 von rechts nach links (zurück)zufördern, in einer Ausführung derart, dass der Luftstrom im Kanal 1, wenigstens im Wesentlichen, gestoppt wird. Dies ist in Fig. 1 durch einen gestrichelten Luftströmungspfeil L angedeutet.

Fig. 2 zeigt einen Teil einer Brennkraftmaschinenanordnung mit einer Zufuhrvorrichtung nach einer weiteren Ausführung der vorliegenden Erfindung in Fig. 1 entsprechender Darstellung.

Einander entsprechende Merkmale sind durch identische Bezugszeichen identifiziert, so dass, insbesondere auch zur Arbeitsweise der Steuerung 40 bzw. dem mit dieser Brennkraftmaschinenanordnung bzw. Zufuhrvorrichtung durchgeführten Verfahren auf die vorstehende Beschreibung Bezug genommen und nachfolgend nur auf Unterschiede eingegangen wird.

In der Ausführung der Fig. 2 ist die elektrische Maschine 30 radial außerhalb einer Innenwand 11 des Kanals 10 angeordnet, so dass die ihre Antriebswelle 31 von der Rotationsachse R des Axiallaufrads radial beabstandet und parallel zur Rotationsachse ist.

Ein Stirnradgetriebe mit einem Zahnrad 60 an bzw. auf der Antriebswelle 31 und einer damit in Eingriff stehenden Außenverzahnung 61 am Außendeckband 22 des Axiallaufrads koppelt die elektrische Maschine 30 mit dem Axiallaufrad.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

**Bezugszeichenliste**

| | |
|---|---|
| 10 | Kanal |
| 11 | Innenwand |
| 20 | Rotor |
| 21 | Laufschaufel |
| 22 | Außendeckband |
| 30 | elektrische Maschine |
| 31 | Antriebswelle |
| 40 | Steuerung |
| 50 | Brennraum |
| 51 | Ansaugkrümmer |
| 60 | Zahnrad |
| 61 | Außenverzahnung |
| L | Luft (strom) |
| R | Rotationsachse |
| S1 | Förder-Betriebsmodus |
| S10-S30 | Drossel-Betriebsmodus |

## Patentansprüche

1. Zufuhrvorrichtung für eine Brennkraftmaschine, insbesondere eines Kraftfahrzeugs, wobei die Zufuhrvorrichtung aufweist:
- einen Kanal (10) zum Führen von Luft (L) für wenigstens einen Brennraum (50) der Brennkraftmaschine;
- wenigstens ein Axiallaufrad mit mehreren an einem Rotor (20) angeordneten Laufschaufeln (21), das in dem Kanal angeordnet ist; und
- wenigstens eine elektrische Maschine (30), die mit dem Axiallaufrad gekoppelt ist.

2. Zufuhrvorrichtung nach Anspruch 1, wobei die elektrische Maschine in dem Kanal, insbesondere stromabwärts nach dem Axiallaufrad, angeordnet ist, insbesondere eine Antriebswelle (31) der elektrischen Maschine parallel, insbesondere koaxial, zur Rotationsachse (R) des Axiallaufrads ist.

3. Zufuhrvorrichtung nach Anspruch 1, wobei eine Antriebswelle (31) der elektrischen Maschine von der Rotationsachse (R) des Axiallaufrads radial beabstandet und/oder parallel zur Rotationsachse (R) des Axiallaufrads ist und/oder die elektrische Maschine radial außerhalb einer Innenwand (11) des Kanals angeordnet ist.

4. Zufuhrvorrichtung nach einem der vorhergehenden Ansprüche, mit einem Getriebe, insbesondere Stirnradgetriebe (60, 61), das die elektrische Maschine mit dem Axiallaufrad koppelt, insbesondere eine Außenverzahnung (61) des Axiallaufrads aufweist.

5. Brennkraftmaschinenanordnung, insbesondere zum Antreiben eines Kraftfahrzeugs, die eine Brennkraftmaschine, insbesondere einen Otto oder Dieselmotor, und eine Zufuhrvorrichtung nach einem der vorhergehenden Ansprüche zum Führen von Luft (L) für wenigstens einen Brennraum (50) der Brennkraftmaschine aufweist.

6. Brennkraftmaschinenanordnung nach dem vorhergehenden Anspruch, mit einer Steuerung (40) zum Betreiben der elektrischen Maschine in einem Drossel-Betriebsmodus (S10-S30), in dem die elektrische Maschine das Axiallaufrad zum Drosseln eines Luftstroms (L) zur Brennkraftmaschine aktuiert, insbesondere zum Betreiben der elektrischen Maschine nach einem Verfahren nach einem der nachfolgenden Ansprüche.

7. Kraftfahrzeug mit einer Brennkraftmaschinenanordnung nach einem der vorhergehenden Ansprüche.

8. Verfahren zum Betreiben einer elektrischen Maschine (30) einer Brennkraftmaschinenanordnung, insbesondere eines Kraftfahrzeugs, die eine Brennkraftmaschine und eine Zufuhrvorrichtung, insbesondere nach einem der vorhergehenden Ansprüche, mit einem Kanal (10) zum Führen von Luft für wenigstens einen Brennraum (50) der Brennkraftmaschine, wenigstens einem Laufrad, insbesondere Axiallaufrad, mit mehreren an einem Rotor (20) angeordneten Laufschaufeln (21), das in dem Kanal angeordnet ist, und der elektrischen Maschine, die mit dem Laufrad gekoppelt ist, aufweist, wobei in einem Drossel-Betriebsmodus (S10-S30) die elektrische Maschine das Laufrad zum Drosseln eines Luftstroms (L) zur Brennkraftmaschine aktuiert.

9. Verfahren nach dem vorhergehenden Anspruch, wobei in einem Drossel-Betriebsmodus (S20) die elektrische Maschine das durch einen von der Brennkraftmaschine angesaugten Luftstrom (L) angetriebene Laufrad generatorisch bremst.

10. Verfahren nach einem der vorhergehenden Ansprüche, wobei in einem Drossel-Betriebsmodus (S30) die elektrische Maschine das Laufrad mit einer Förderrichtung antreibt, die gegensinnig zu einem von der Brennkraftmaschine angesaugten Luftstrom (L) ist.

11. Verfahren nach einem der vorhergehenden Ansprüche, wobei in einem Drossel-Betriebsmodus (S10) die elektrische Maschine das Laufrad mit einer Förderrichtung antreibt, die gleichsinnig zu einem von der Brennkraftmaschine angesaugten Luftstrom (L) ist, und das Laufrad den von der Brennkraftmaschine angesaugten Luftstrom abbremst und/oder dessen statischen Druck reduziert.

12. Verfahren nach einem der vorhergehenden Ansprüche, wobei in einem Förder Betriebsmodus (S1) die elektrische Maschine das Laufrad mit einer Förderrichtung antreibt, die gleichsinnig zu einem von der Brennkraftmaschine angesaugten Luftstrom (L) ist, und das Laufrad den von der Brennkraftmaschine angesaugten Luftstrom beschleunigt und/oder dessen statischen Druck erhöht.
